Europäisches Patentamt

European Patent Office

Office européen des brevets

(11) Numéro de publication: **0 013 514**

**A1**

## (12) DEMANDE DE BREVET EUROPEEN

(21) Numéro de dépôt: **79400027.3**

(22) Date de dépôt: **15.01.79**

(51) Int. Cl.³: **F 26 B 21/00**

(43) Date de publication de la demande:
**23.07.80 Bulletin 80/15**

(84) Etats Contractants Désignés:
**BE DE GB NL**

(71) Demandeur: **Société en nom collectif dite: ALFA-LAVAL & Cie EVA-DRY**
**30, Avenue Amiral-Lemonnier**
**F-78160 Marly-le-Roi(FR)**

(72) Inventeur: **Masson, Michel**
**2, Allée Marolles**
**F-78112 Fourqueux(FR)**

(74) Mandataire: **Blétry, Robert et al,**
**OFFICE BLéTRY 2, Boulevard de Strasbourg**
**F-75010 Paris(FR)**

(54) Installation de séchage par air chaud.

(57) Installation de séchage par air chaud du type comprenant une chambre de séchage (1), un circuit pour l'alimentation de la chambre de séchage en air chaud comportant un dispositif de chauffage de l'air (6), un circuit pour l'évacuation de l'air chaud chargé de vapeur, et un échangeur de chaleur de chaleur air-air (4) dont le circuit de fluide chaud est connecté en série dans le circuit d'évacuation d'air chaud chargé de vapeur, et dont le circuit de fluide froid est connecté en série dans le circuit d'alimentation en air chaud en amont du dispositif de chauffage (6). Le circuit de fluide froid de l'échangeur de chaleur (4) comportent, en un point intermédiaire, une entrée auxiliaire (12) d'air extérieur, qui est pourvue d'un obturateur variable (13) commandé par une chaîne de régulation classique (14) en fonction du degré hygrométrique ou d'une grandeur liée au degré hygrométrique de l'air sortant du circuit de fluide chaud de l'échangeur (4).

EP 0 013 514 A1

—1—

## Installation de séchage par air chaud

La présente invention concerne une installation de séchage par air chaud du type comprenant une chambre de séchage, un circuit pour l'alimentation de la chambre de séchage en air chaud, comportant un dispositif de prélèvement d'air extérieur et un dispositif de chauffage de l'air prélevé pour le porter à une température prédéterminée, un circuit pour l'évacuation de l'air chaud chargé de vapeur hors de la chambre de séchage vers l'extérieur, et un échangeur de chaleur air-air dont le circuit de fluide chaud est connecté en série dans le circuit d'évacuation d'air chaud chargé de vapeur, et dont le circuit de fluide froid est connecté en série dans le circuit d'alimentation en air chaud en amont du dispositif de chauffage.

Dans les industries alimentaires, chimiques et pharmaceutiques, on connaît déjà des installations du type susindiqué, notamment pour la production de produits pulvérulents, comme par exemple le lait en poudre.

Dans les installations de ce genre, l'air chaud chargé de vapeur, qui sort de la chambre de séchage et qui entraine avec lui une certaine quantité de particules de produit pulvérulent, est tout d'abord envoyé dans un cyclone séparateur pour séparer les particules de produits pulvérulents de l'air. L'air chaud chargé de vapeur sortant du cyclone séparateur est aspiré par un ventilateur et refoulé à l'extérieur à travers une cheminée d'évacuation.

Comme l'air chargé de vapeur, qui est évacué à l'extérieur, est encore à une température relativement élevée, il a déjà été proposé de récupérer les calories contenues dans cet air en le faisant passer dans un échangeur de chaleur air-air mis à la place de la cheminée d'évacuation, de façon à préchauffer l'air extérieur qui est admis dans la chambre de séchage avant que cet air ne soit chauffé par le dispositif de chauffage. Toutefois, dans ce cas, comme la température de l'air extérieur qui est prélevée dans l'atmosphère et qui est admis dans le circuit de fluide froid de l'échangeur peut varier dans de larges proportions suivant la saison, le jour et la nuit, il se pose un problème par temps froid. En effet, dans ce cas, l'air extérieur froid admis peut abaisser, par échange thermique, la température de l'air chaud sortant chargé de vapeur au dessous du point de rosée (température de condensation) de la vapeur qui, de ce fait, se condense dans le circuit de fluide chaud de l'échangeur. Comme, malgré la présence du cyclone séparateur, l'air chaud chargé de vapeur qui sort de ce cyclone séparateur et qui est admis dans le circuit de fluide chaud de l'échangeur est encore chargé de fines poussières de produit pulvérulent, ces fines poussières forment avec la vapeur condensée des boues qui obligent à effectuer un fréquent nettoyage de l'échangeur de chaleur. Pour remédier à cet inconvénient, on pourrait bien entendu réduire la surface d'échange de l'échangeur de chaleur, mais cette réduction de la surface d'échange se ferait au détriment du préchauffage de l'air extérieur avant qu'il ne soit chauffé par le dispositif de chauffage. Or, il ne faut pas perdre de vue que l'on a intérêt à préchauffer à une température la plus élevée possible l'air extérieur admis en utilisant au maximum les calories contenues dans l'air chaud chargé de vapeur évacué vers l'extérieur. En effet, plus important est le préchauffage de l'air extérieur admis avec des calories qui autrement seraient dépensées en pure perte, moins grande sera la quantité d'énergie qui est ensuite nécessaire pour chauffer l'air à une température prédéterminée, et, par conséquent, plus grande sera l'économie d'énergie.

La présente invention a donc essentiellement pour but de fournir une installation de séchage par air chaud du type susindiqué, dans laquelle l'air extérieur admis peut être préchauffé à une température plus élevée que dans les installations de séchage antérieurement connues de ce type, sans que l'air chaud chargé de vapeur qui est évacué à l'extérieur ne se condense dans l'échangeur de chaleur.

A cet effet, l'installation de séchage par air chaud selon la présente invention est caractérisée en ce que le circuit de fluide froid de l'échangeur de chaleur comporte une entrée auxiliaire d'air extérieur, qui est pourvue d'un obturateur variable commandé par une chaîne de régulation classique en fonction du degré hygrométrique ou d'une grandeur liée au degré hygrométrique de l'air sortant du circuit de fluide chaud de l'échangeur, et qui est disposée de manière à court-circuiter, lorsque l'obturateur est ouvert, au moins une partie du circuit de fluide froid de l'échangeur de chaleur.

Suivant une forme d'exécution préférée de la présente invention, la chaîne de régulation est agencée pour réagir à la température de l'air sortant du circuit de fluide chaud de l'échangeur.

Grâce à un tel agencement, il est possible de faire en sorte que la température de l'air chaud chargé de vapeur qui sort de l'échangeur de chaleur reste sensiblement constante à une valeur légèrement supérieure au point de rosée de la vapeur quelle que soit la température de l'air extérieur admis dans le circuit de fluide froid de l'échangeur. Dans ces conditions, l'air chaud chargé de vapeur traversant le circuit de fluide chaud de l'échangeur cèdera toujours une quantité de chaleur sensiblement constante à l'air extérieur admis dans le circuit de fluide froid de l'échangeur. La surface d'échange de l'échangeur de chaleur peut être alors calculée pour une température de l'air extérieur (variable suivant la saison, le jour et la nuit) ayant un haut niveau, éventuellement le niveau maximum, par exemple 30 à 35°C, sans que l'on risque, par temps froid, que la vapeur contenue dans l'air chaud évacué ne se condense.

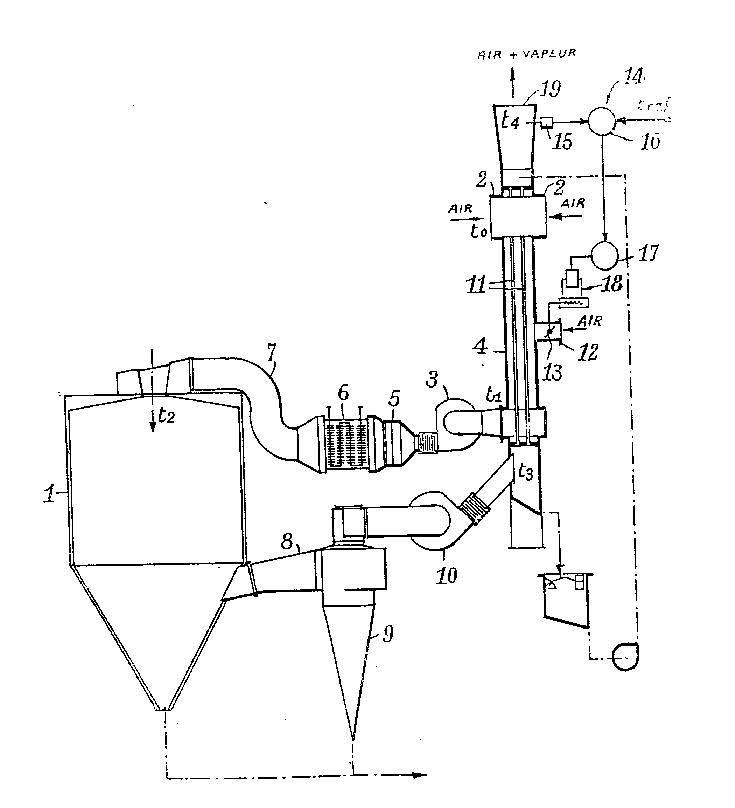

On décrira maintenant une forme d'exécution de la présente invention en faisant référence à la figure unique du dessin annexé, qui illustre schématiquement une installation de séchage par air chaud conforme à la présente invention.

L'air extérieur qui doit être envoyé chaud dans la chambre de séchage 1 est prélevé dans l'atmosphère par des buses d'aspiration 2. L'air aspiré par un ventilateur 3 à travers les buses 2 et le circuit de fluide froid d'un échangeur de chaleur 4 dans lequel l'air extérieur est préchauffé à une température $t_1$. Le ventilateur 3 refoule l'air préchauffé successivement à travers une batterie de filtres 5 et un dispositif de chauffage 6 permettant de chauffer l'air à une température prédéterminée $t_2$. Comme montré sur le dessin, le dispositif de chauffage 6 peut être par exemple constitué par une batterie à ailettes chauffée à la vapeur. Toutefois, le dispositif de chauffage 6, qui doit être spécialement adapté aux produits à sécher et aux besoins de l'utilisateur, peut être constitué par tout autre moyen de chauffage.

L'air chauffé par le dispositif de chauffage 6 est acheminé à la chambre de séchage 1 par une conduite 7. Le produit à sécher, mélangé à un solvant (en général de l'eau), peut être injecté et pulvérisé dans le courant d'air chaud admis dans la chambre de séchage 1 au moyen d'une buse de pulvérisation non montrée.

Dans la chambre de séchage 1, l'air chaud cède de la chaleur au produit à sécher et se charge de solvant (eau) sous forme de vapeur. L'air chaud qui sort de la chambre de séchage 1 et qui est chargé de vapeur et d'une certaine quantité de particules solides de produit, est acheminé par une conduite 8 à un cyclone séparateur 9 dans lequel l'air est débarrassé des particules solides de produit. Le produit séché est récupéré à la base de la chambre de séchage 1 et à la base du cyclone séparateur 9, d'où il est envoyé à d'autres circuits de traitement et d'utilisation non montrés. L'air chaud chargé de vapeur sortant du cyclone séparateur 9 à une température $t_3$ est aspiré par un ventilateur 10 et refoulé à travers le circuit de fluide chaud de l'échangeur de chaleur 4 avant d'être évacué en 19 à l'atmosphère. Dans l'échangeur de chaleur 4, l'air chaud chargé de vapeur cède une partie de sa chaleur à l'air extérieur aspiré par le ventilateur 3.

L'échangeur de chaleur 4 peut être par exemple un échangeur tubulaire air-air à contre-courant, qui peut être facilement mis en place au lieu de la cheminée traditionnelle et qui, en cas de besoin, peut être aisément nettoyé en "flot tombant" en circuit fermé. L'air chaud chargé de vapeur et de poussières résiduelles circule à l'intérieur des tubes 11 de l'échangeur 4, alors que l'air extérieur aspiré par le ventilateur 3 circule autour des tubes 11. Bien entendu, à la place de l'échangeur tubulaire 4, on pourrait aussi utiliser tout autre type d'échangeur de chaleur, par exemple un échangeur à plaques.

Selon la présente invention, le circuit de fluide froid de l'échangeur de chaleur 4 comporte une entrée auxiliaire 12 pour l'air extérieur, qui est pourvue d'un obturateur variable 13 commandé par une chaîne de régulation classique 14 adaptée pour maintenir un degré hygrométrique sensiblement constant ou une température sensiblement constante de l'air évacué en 19 dans l'atmosphère.

En admettant que la température $t_0$ de l'air extérieur admis en 2 dans le circuit de fluide froid de l'échangeur de chaleur 4 varie entre environ 0°C et environ 30°C suivant la saison, le jour et la nuit, et que les débits d'air circulant dans les deux circuits de l'échangeur de chaleur 4 sont sensiblement égaux et constants, l'échangeur de chaleur 4 est dimensionné pour une température $t_0$ de l'air extérieur sensiblement égale à 30°C de telle façon que la température $t_4$ de l'air sortant en 19 ait une valeur légèrement supérieure au point de rosée de la vapeur contenue dans l'air sortant en 19. Par exemple, $t_4$ pourra être supérieur d'environ 3 à 5°C à la valeur du point de rosée. Compte tenu du coefficient global de transfert de l'échangeur 4, ceci permet de déterminer la surface totale d'échange de l'échangeur, qui est concrétisée par un certain nombre de tubes ou de plaques.

Lorsque la température $t_0$ de l'air extérieur est à sa valeur minimale, par exemple 0°C, du fait de la surface d'échange existante (trop grande) de l'échangeur 4, la température $t_4$ de l'air sortant pourrait passer à une valeur inférieure au point de rosée et une partie du solvant (vapeur d'eau) contenu dans l'air sortant se condenserait en gouttelettes qui formeraient des boues avec les fines particules résiduelles contenues dans l'air sortant. Ceci peut être évité en court-circuitant une partie du circuit de fluide froid de l'échangeur de chaleur 4 en admettant une quantité plus ou moins grande d'air extérieur à travers l'entrée auxiliaire 12 en fonction du degré hygrométrique de l'air sortant en 19 ou, plus commodément, en fonction de la température $t_4$ de l'air sortant.

La chaîne de régulation 14 qui commande l'obturateur variable 13 de l'entrée 12 peut par exemple comprendre un capteur de température 15 dont le signal de sortie est comparé par un comparateur 16 à une valeur de référence $t_{ref}$ correspondant à une température légèrement supérieure au point de rosée de la vapeur. Le signal d'erreur, positif ou négatif, fourni par le comparateur 16 est convenablement amplifié par un amplificateur 17 et utilisé pour commander un dispositif d'actionnement réversible 18 apte, selon le cas, à ouvrir ou à fermer de manière progressive l'obturateur variable 13. Cet obturateur variable 13 peut être de n'importe quel type, à volet, à papillon, à aubes, ou encore du genre diaphragme d'objectif photographique. Le dispositif d'actionnement 18 peut être aussi de nimporte quel type, tel que vérin hydraulique ou pneumatique à double effet, moteur électrique réversible pas à pas, moteur électrique réversible associé à un ensemble vis et écrou ou à un ensemble pignon et crémaillère.

Avec un tel agencement, lorsque, par temps froid, la température $t_4$ de l'air sortant tend à s'abaisser au-dessous de la température de référence $t_{ref}$, la chaîne de régulation 14 réagit de manière à ouvrir partiellement ou en totalité l'obturateur variable 13. Au contraire, lorsque la température $t_4$ tend à dépasser la température de référence $t_{ref}$, la chaîne de régulation 14 réagit de manière à fermer partiellement ou totalement l'obturateur variable 13.

Bien entendu, l'entrée auxiliaire 12 devra être placée le long de l'échangeur 4 à un niveau tel que, lorsque la température $t_0$ de l'air extérieur a sa valeur minimale et que l'obturateur variable 13 est complètement ouvert, la température $t_4$ reste sensiblement égale à la température de référence $t_{ref}$ et, de toute façon, supérieure au point de rosée de la vapeur. Dans la pratique, l'entrée auxiliaire 12 se trouvera en général à un niveau situé entre l'entrée 2 et le ventilateur 3, mais elle pourra également être placée, lorsque la température $t_0$ pourra prendre des valeurs très basses, au même niveau que le ventilateur 3, c'est-à-dire à la sortie du circuit de fluide froid de l'échangeur 4.

A titre indicatif, dans le cas d'une installation de séchage par air chaud pour la fabrication de lait en poudre, dans laquelle l'air chaud est admis dans la chambre de séchage 1 à une température $t_2$ d'environ 190°C, dans laquelle l'air sortant du ventilateur 19 est admis à l'entrée du circuit de fluide chaud de l'échangeur de chaleur 4 à une température $t_3$ d'environ 70°C, et dans laquelle le point de rosée de la vapeur contenue dans l'air sortant en 19 est d'environ 38°C, la chaîne de régulation 14 est agencée pour maintenir la température $t_4$ de l'air sortant à une valeur sensiblement constante d'environ 42°C. Dans ces conditions, lorsque l'échangeur de chaleur est dimensionné pour une température $t_0$ de l'air extérieur égale à 30°C, il est possible de préchauffer l'air extérieur à une température $t_2$ d'environ 55 à 58°C. Ceci permet de garantir, pour le dispositif de chauffage 6, une consommation moyenne d'énergie, en équivalent vapeur, d'environ 1,45 kg de vapeur par kg d'eau évaporée, au lieu de 1,7 kg pour les installations conventionnelles, c'est-à-dire une consommation d'énergie calorifique d'environ 14 % plus faible que la consommation moyenne habituellement relevée dans les installations conventionnelles.

Il est bien entendu que la forme d'exécution de l'invention qui a été décrite ci-dessus a été donnée à titre d'exemple purement indicatif et nullement limitatif, et que de nombreuses modifications peuvent être apportées sans pour autant sortir du cadre de la présente invention.

SIX PAGES.-

P/P de la Société en nom collectif dite : ALFA-LAVAL & Cie EVA-DRY

Le Mandataire : Robert BLETRY
(OFFICE BLETRY)

0013514

REVENDICATIONS DE BREVET
———————————————————————

1. Installation de séchage par air chaud du type comprenant une chambre de séchage, un circuit pour l'alimentation de la chambre de séchage en air chaud, comportant un dispositif de prélèvement d'air extérieur et un dispositif de chauffage de l'air prélevé pour le porter à une température prédéterminée, un circuit pour l'évacuation de l'air chaud chargé de vapeur hors de la chambre de séchage vers l'extérieur, et un échangeur de chaleur air-air dont le circuit de fluide chaud est connecté en série dans le circuit d'évacuation d'air chaud chargé de vapeur, et dont le circuit de fluide froid est connecté en série dans le circuit d'alimentation en air chaud en amont du dispositif de chauffage, caractérisée en ce que le circuit de fluide froid de l'échangeur de chaleur 4 comporte, une entrée auxiliaire 12 d'air extérieur, qui est pourvue d'un obturateur variable 13 commandé par une chaîne de régulation classique 14 en fonction du degré hygrométrique ou d'une grandeur liée au degré hygrométrique de l'air sortant du circuit de fluide chaud de l'échangeur 4, et qui est disposé de manière à court-circuiter, lorsque l'obturateur est ouvert, au moins une partie du circuit de fluide froid de l'échangeur 4.

2. Installation selon la revendication 1, caractérisée en ce que la chaîne de régulation 14 est agencée pour réagir à la température de l'air sortant du circuit de fluide chaud de l'échangeur 4.

UNE PAGE.—     P/P de la société en nom collectif dite :
               ALFA-LAVAL & Cie EVA-DRY

               Le Mandataire :  Robert BLETRY
                                (OFFICE BLETRY)

AIR + VAPEUR

**Office européen des brevets**

**RAPPORT DE RECHERCHE EUROPEENNE**

| Catégorie | Citation du document avec indication, en cas de besoin, des parties pertinentes | Revendication concernée |
|---|---|---|
| | DE - A - 2 611 951 (ALPINE AG)<br>* Ensemble du brevet *<br><br>-- | 1 |
| A | DE - A - 2 360 467 (SEILER)<br>* Ensemble du brevet *<br><br>-- | 1 |
| A | DE - C - 462 779 (TELEX)<br>* Ensemble du brevet *<br><br>---- | 1 |

## DOCUMENTS CONSIDERES COMME PERTINENTS

**CLASSEMENT DE LA DEMANDE (Int. Cl.²)**

F 26 B 21/00

**DOMAINES TECHNIQUES RECHERCHES (Int. Cl.²)**

F 26 B
B 01 D

**CATEGORIE DES DOCUMENTS CITES**

X: particulièrement pertinent
A: arrière-plan technologique
O: divulgation non-ecrite
P: document intercalaire
T: théorie ou principe a la base de l'invention
E: demande faisant interférence
D: document cité dans la demande
L: document cité pour d'autres raisons

&: membre de la même famille, document correspondant

Le present rapport de recherche a ete etabli pour toutes les revendications

| Lieu de la recherche | Date d'achevement de la recherche | Examinateur |
|---|---|---|
| La Haye | 05-09-1979 | DE RIJCK |

OEB Form 1503.1   06.78